# EUROPEAN PATENT APPLICATION

(11) **EP 4 590 025 A1**
(43) Date of publication of application: **23.07.2025**
(21) Application number: 23867383.4
(22) Date of filing: 14.09.2023
(51) Int. Cl.: H04W 40/12, H04W 40/02, H04W 4/46

(54) **USER EQUIPMENT, WIRELESS COMMUNICATION METHOD, AND COMPUTER READABLE STORAGE MEDIUM**

(30) Priority: 21.09.2022 CN 202211154938
(71) Applicant: Sony Group Corporation, Tokyo 108-0075 (JP)
(72) Inventor: SUN, Chen, Beijing 100027 (CN); WANG, Xiaoxue, Beijing 100027 (CN)
(74) Representative: D Young & Co LLP
(86) International application number: PCT/CN2023/118740
(87) International publication number: WO 2024/061094

(57) **Abstract**

The present disclosure relates to a user equipment, a wireless communication method, and a computer readable storage medium. The user equipment according to the present disclosure comprises a processing circuit configured to: generate link quality indication information and send same to a peer user equipment, the link quality indication information indicating the quality of a link between the user equipment and each of a plurality of communication devices; and receive, from the peer user equipment, link priority indication information determined according to the link quality indication information, the link priority indication information comprising priority information of a plurality of links between the peer user equipment and the user equipment. The use of the user equipment, the wireless communication method, and the computer readable storage medium according to the present disclosure can achieve quick switching of communication links between user equipments, thereby ensuring communication quality.

## Description

This application claims priority to Chinese Patent Application No. 202211154938.X titled "USER EQUIPMENT, WIRELESS COMMUNICATION METHOD, AND COMPUTER READABLE STORAGE MEDIUM", filed on September 21, 2022 with the China National Intellectual Property Administration (CNIPA), which is incorporated herein by reference in its entirety.

### FIELD

Embodiments of the present disclosure generally relates to the field of wireless communication, and in particular to user equipment, a wireless communication method performed by user equipment, and a computer-readable storage medium. More specifically, embodiments of the present disclosure relate to user equipment on transmitting end, user equipment on receiving end, a wireless communication method performed by the user equipment on transmitting end, a wireless communication method performed by the user equipment on receiving end, and a computer-readable storage medium.

### BACKGROUND

Sidelink (SL) communication is applicable in a wide range of scenarios, such as Internet of Vehicles, Extended Reality (XR) including AR, VR, and MR, autonomous driving, and industrial automation. These advanced application scenarios put forward higher requirements for SL communication. For example, a higher transmission speed and a lower transmission delay are required.

In SL communication, positions of a transmitting end communication apparatus and a receiving end communication apparatus may change within a short period of time. In addition, the quality of communication links may deteriorate rapidly due to rapid mobility of the communication apparatuses and presence of obstructions. In this case, how to perform a fast link switching when the quality of the communication link drops to a certain level is a key to maintaining communication quality.

Therefore, it is necessary to propose a technical solution to quickly switch a communication link between user equipment in SL communication, so as to ensure communication quality.

### SUMMARY

This section provides a general summary of the present disclosure, rather than a comprehensive disclosure of a full scope or all features of the present disclosure.

An object of the present disclosure is to provide user equipment, a wireless communication method, and a computer-readable storage medium, with which fast switching of communication links between user equipment can be implemented, and thereby communication quality is ensured.

According to an aspect of the present disclosure, user equipment is provided, which includes processing circuitry. The processing circuitry is configured to: generate and transmit link quality indication information to counterpart user equipment, the link quality indication information indicating a quality of a link between the user equipment and each of a plurality of communication apparatuses; and receive, from the counterpart user equipment, link priority indication information determined according to the link quality indication information, the link priority indication information including priority information of a plurality of links between the counterpart user equipment and the user equipment.

According to another aspect of the present disclosure, user equipment is provided, which includes processing circuitry. The processing circuitry is configured to: receive link quality indication information from counterpart user equipment, the link quality indication information indicating a quality of a link between the counterpart user equipment and each of a plurality of communication apparatuses; determine link priority indication information according to the link quality indication information, the link priority indication information including priority information of a plurality of links between the user equipment and the counterpart user equipment; and transmit the link priority indication information to the counterpart user equipment.

According to another aspect of the present disclosure, a wireless communication method performed by user equipment is provided, including: generating and transmitting link quality indication information to counterpart user equipment, the link quality indication information indicating a quality of a link between the user equipment and each of a plurality of communication apparatuses; and receiving, from the counterpart user equipment, link priority indication information determined according to the link quality indication information, the link priority indication information including priority information of a plurality of links between the counterpart user equipment and the user equipment.

According to another aspect of the present disclosure, a wireless communication method performed by user equipment is provided, including: receiving link quality indication information from counterpart user equipment, the link quality indication information indicating a quality of a link between the counterpart user equipment and each of a plurality of communication apparatuses; determining link priority indication information according to the link quality indication information, the link priority indication information including priority information of a plurality of links between the user equipment and the counterpart user equipment; and transmitting the link priority indication information to the counterpart user equipment.

According to another aspect of the present disclosure, a computer-readable storage medium including executable computer instructions is provided. The executable computer instructions, when executed by a computer, cause the computer to perform the wireless communication method according to the present disclosure.

According to another aspect of the present disclosure, a computer program is provided. The computer program, when executed by a computer, causes the computer to perform the wireless communication method according to the present disclosure.

With the user equipment, the wireless communication method, and the computer-readable storage medium according to the present disclosure, the user equipment can receive, from the counterpart user equipment, the link priority indication information determined according to the link quality indication information transmitted from the user equipment. The link priority indication information includes priority information of multiple links between the counterpart user equipment and the user equipment. In this way, both the counterpart user equipment and the user equipment can store the priority information of the links, and therefore link switching can be performed based on the priority information as needed, without the need for link measurement, reporting, recovery, and other operations. In this way, fast switching of links is implemented and communication quality is ensured.

Further applicability will become apparent from the description provided herein. The description and specific examples in this summary are for purposes of illustration only and are not intended to limit the scope of the present disclosure.

### BRIEF DESCRIPTION OF THE DRAWINGS

The accompanying drawings described herein are only for illustrative purposes of selected embodiments, rather than all possible embodiments, and are not intended to limit the scope of the present disclosure. In the drawings:
Figure 1 is a schematic diagram illustrating an application scenario of the present disclosure;
Figure 2 is a block diagram illustrating an exemplary configuration of user equipment on receiving end according to an embodiment of the present disclosure;
Figure 3 is a schematic diagram illustrating a scenario in which User Equipment (UE) 1 and UE 2 communicate with each other through a direct link according to an embodiment of the present disclosure;
Figure 4 is a schematic diagram showing a scenario of switching a communication link between UE1 and UE2 according to an embodiment of the present disclosure;
Figure 5 is a block diagram illustrating an exemplary configuration of user equipment on transmitting end according to an embodiment of the present disclosure;
Figure 6 is a schematic diagram showing a scenario of switching a communication link between UE1 and UE2 again according to an embodiment of the present disclosure;
Figure 7 is a diagram illustrating a signaling flow for link switching using link priority indication information according to an embodiment of the present disclosure;
Figure 8 is a diagram illustrating a signaling flow for link switching using link priority indication information according to another embodiment of the present disclosure;
Figure 9 is a flowchart illustrating a wireless communication method performed by user equipment on receiving end according to an embodiment of the present disclosure;
Figure 10 is a flowchart illustrating a wireless communication method performed by user equipment on transmitting end according to an embodiment of the present disclosure;
Figure 11 is a block diagram showing an example of a schematic configuration of a smart phone; and
Figure 12 is a block diagram showing an example of a schematic configuration of an automobile navigation device.

Although the present disclosure is easily subjected to various modifications and replacements, specific embodiments thereof, as examples, are shown in the drawings and described in detail here. However, it should be understood that, the description of specific embodiments herein is not intended to limit the present disclosure to specific forms that are disclosed. On the contrary, an object of the present disclosure is to cover all modifications, equivalents and replacements that fall within the spirit and scope of the present disclosure. It should be noted that throughout the several drawings, corresponding components are indicated by corresponding reference numerals.

### DETAILED DESCRIPTION

Examples of the present disclosure are now fully described with reference to the accompanying drawings. The following description is merely substantially exemplary and is not intended to limit the present disclosure, an application or use thereof.

Exemplary embodiments are provided so that the present disclosure is described in detail and fully conveys the scope thereof to those skilled in the art. Examples of specific components, apparatus, methods and other specific details are set forth to provide detailed understanding of embodiments of the present disclosure. It will be apparent to those skilled in the art that the exemplary embodiments may be implemented in many different forms without the use of specific details, and they should not be construed as limiting the scope of the present disclosure. In some exemplary embodiments, well-known processes, well-known structures, and well-known technologies are not described in detail.

The description is given in the following order.
1. Description of scenarios;
2. Exemplary configuration of user equipment on receiving end;
3. Exemplary configuration of user equipment on transmitting end;
4. Method embodiment; and
5. Application example.

### <1. Description of scenarios>

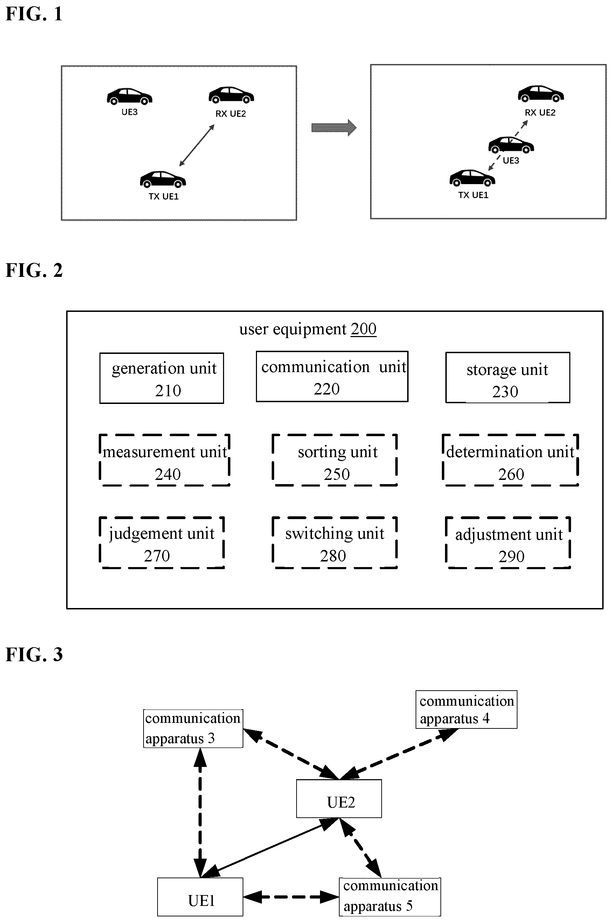

Figure 1 is a schematic diagram illustrating an application scenario of the present disclosure. As shown in Figure 1, transmitting end user equipment of SL communication is identified as TX UE1, and receiving end user equipment is identified as RX UE2. Here, SL communication is applied to the Internet of Vehicles, and therefore UE1 and UE2 are both vehicles. Additionally, UE3 which is a vehicle is further shown in Figure 1. As shown in Figure 1, UE1 and UE2 communicate with each other through a direct link therebetween. Then, UE3 travels between UE1 and UE2 and blocks the direct link between UE1 and UE2, causing decrease of the quality of the direct link between UE1 and UE2.

In the scenario shown in Figure 1, rapid mobility of each UE and presence of an obstruction may cause rapid deterioration of the quality of the communication link. In this case, how to perform a fast link switching when the quality of the communication link drops to a certain level is a key to maintaining communication quality. Figure 1 is merely an example, and such problem exists when SL communication is applied to other scenarios.

In view of such scenario, the present disclosure proposes user equipment in a wireless communication system, a wireless communication method performed by the user equipment in the wireless communication system, and a computer-readable storage medium, with which fast switching of communication links between user equipment can be implemented, and thereby communication quality is ensured.

The user equipment according to the present disclosure may be a mobile terminal (such as a smart phone, a tablet personal computer (PC), a notebook PC, a portable game terminal, a portable/dongle-type mobile router, and a digital camera), or an in-vehicle terminal (such as a car navigation device). The user equipment may be implemented as a terminal that performs machine-to-machine (M2M) communications, which is also referred to as machine type communication (MTC) terminal. Furthermore, the user equipment may be a wireless communication module (such as an integrated circuit module including a single chip) installed on each of the above-mentioned terminals.

In particular, the present disclosure may be applied in the Internet of Vehicles, that is, the user equipment may be integrated in a vehicle, or may be provided in a vehicle separately from the vehicle.

A wireless communication system according to the present disclosure may be applied to a 5G NR communication system or may be applied to a higher-level communication system in the future. The wireless communication system may include transmitting end user equipment and receiving end user equipment that communicate using SL. In addition, the wireless communication system may further include one or more other communication apparatuses. The one or more communication apparatuses may include apparatuses capable of forwarding data, such as user equipment at a pedestrian, user equipment at a vehicle, a road side unit (RSU), and a large intelligent surface (LIS). In addition, the other communication apparatuses are described with respect to the transmitting end user equipment and the receiving end user equipment in a specific SL communication, and the other communication apparatuses may be transmitting end user equipment or receiving end user equipment in a different SL communication. That is, the wireless communication system may include multiple user equipments, at least two of which communicate using SL. Optionally, the wireless communication system may further include apparatuses capable of forwarding data such as RSU and LIS.

In the wireless communication system according to the present disclosure, FR2 millimeter wave frequency band may be utilized to improve data throughput. Due to high frequency, small coverage, and large propagation loss of the FR2 band, beam forming is usually adopted for data transmission. That is, the user equipment according to the present disclosure may perform SL communication using beam forming. In addition, the communication apparatus for forwarding data may communicate with the user equipment using beam forming.

### <2. Exemplary configuration of user equipment on receiving end>

Figure 2 is a block diagram illustrating an exemplary configuration of user equipment 200 according to an embodiment of the present disclosure. Here, the user equipment 200 may be receiving end user equipment in SL communication in a wireless communication system.

As shown in Figure 2, the user equipment 200 may include a generation unit 210, a communication unit 220, and a storage unit 230.

Here, units of the user equipment 200 may be included in processing circuitry. It should be noted that the user equipment 200 may include a single processing circuit or multiple processing circuits. Further, the processing circuitry may include various discrete functional units for performing various different functions and/or operations. It should be noted that these functional units may be physical entities or logical entities, and units with different names may be implemented by the same physical entity.

According to an embodiment of the present disclosure, the generation unit 210 may generate link quality indication information. The link quality indication information indicates a quality of a link between the user equipment 200 and each of multiple communication apparatuses. Further, the user equipment 200 may transmit the link quality indication information to the counterpart user equipment through the communication unit 220. Here, the counterpart user equipment may be transmitting end user equipment for SL communication.

According to an embodiment of the present disclosure, the user equipment 200 may receive link priority indication information from the counterpart user equipment through the communication unit 220, and the link priority indication information is determined by the counterpart user equipment according to the link quality indication information. Here, the link priority indication information includes priority information of multiple links between the counterpart user equipment and the user equipment 200.

Further, the user equipment 200 may store the link priority indication information in the storage unit 230.

As can be seen, according to the embodiment of the present disclosure, the user equipment 200 can receive, from the counterpart user equipment, the link priority indication information determined according to the link quality indication information transmitted from the user equipment 200. The link priority indication information includes priority information of multiple links between the counterpart user equipment and the user equipment 200. In this way, both the counterpart user equipment and the user equipment 200 can store the priority information of the links, and therefore link switching can be performed based on the priority information as needed, without the need for link measurement, reporting, recovery, and other operations. In this way, fast switching of links is implemented and communication quality is ensured.

According to an embodiment of the present disclosure, the user equipment 200 may transmit the link quality indication information to the counterpart user equipment after a link is established between the counterpart user equipment and the user equipment 200.

According to an embodiment of the present disclosure, in a case where the counterpart user equipment and the user equipment 200 communicate with each other by beam forming, a link may be established through a beam scanning process between the counterpart user equipment and the user equipment 200. Specifically, the counterpart user equipment may determine the best beam pair between the counterpart user equipment and the user equipment 200 through a beam scanning process, and then use the best beam pair to perform SL communication through the direct link.

According to an embodiment of the present disclosure, in a case where the counterpart user equipment and the user equipment 200 are both located within a coverage of a base station apparatus, the base station apparatus may configure part of the beam for beam scanning based on locations of the counterpart user equipment and the user equipment 200 (optionally, further based on movement information of the counterpart user equipment and the user equipment 200, such as movement direction and movement speed). In this way, the counterpart user equipment can perform partial beam scanning, and the user equipment 200 can perform partial beam scanning pairing. Therefore, a time period taken for the beam scanning process is reduced. Further, in a case where the counterpart user equipment or the user equipment 200 is located outside the coverage of the base station apparatus, the counterpart user equipment may perform omnidirectional beam scanning, and the user equipment 200 may perform omnidirectional beam scanning pairing.

Figure 3 is a schematic diagram showing a scenario of UE1 and UE2 communicating with each other by using a direct link according to an embodiment of the present disclosure. In Figure 3, UE1 serves as transmitting end user equipment, and UE2 serves as receiving end user equipment. There are three communication apparatuses around UE1 and UE2, i.e., communication apparatus 3, communication apparatus 4 and communication apparatus 5. The two parties pointed by an arrow have established a connection. That is, in addition to that UE1 and UE2 are communicating with each other through a direct link, UE1 has further established connections with communication apparatus 3 and communication apparatus 5, and UE2 has further established connections with communication apparatus 3, communication apparatus 4 and communication apparatus 5.

According to an embodiment of the present disclosure, UE2 may transmit link quality indication information to UE1. The link quality indication information indicates a quality of a link between UE2 and each communication apparatus of multiple communication apparatuses. Further, UE1 may determine link priority indication information according to the link quality indication information from UE2, and the link priority indication information includes priority information of multiple links between UE1 and UE2.

According to an embodiment of the present disclosure, multiple communication apparatuses involved in the link quality indication information may be communication apparatuses that have established connections with the user equipment 200, and the multiple communication apparatuses include but are not limited to user equipment (such as user equipment at a pedestrian, user equipment at a vehicle), road side units or intelligent reflecting surfaces. That is, the multiple communication apparatuses may be any communication apparatus capable of forwarding data.

As mentioned above, according to an embodiment of the present disclosure, the generation unit 210 may generate link quality indication information. The link quality indication information indicates a quality of a link between the user equipment 200 and each of multiple communication apparatuses that have established connections with the user equipment 200. For example, in Figure 3, the link quality indication information generated by UE2 may indicate the quality of the link between UE2 and communication apparatus 3, the link between UE2 and communication apparatus 4, the link between UE2 and communication apparatus 5, and the link between UE2 and UE1.

According to an embodiment of the present disclosure, the link quality indication information may indicate an absolute value of the quality of the link between the user equipment 200 and each communication apparatus. For example, the absolute value of the quality of the link may be indicated by Signal to Interference Ratio (SIR), Signal to Interference plus Noise Ratio (SINR), Signal Noise Ratio (SNR), Reference Signal Receiving Power (RSRP), Reference Signal Receiving Quality (RSRQ), and other parameters. In addition, the link quality indication information may further indicate a relative value of the quality of the link between the user equipment 200 and each communication apparatus. For example, the relative value of the quality of the link may be represented by a difference with a link quality reference value or a ratio with the link quality reference value, or may be represented by a normalized value. The representation of link quality is not limited in the present disclosure.

That is, in the example shown in Figure 3, the link quality indication information may include the following information: Link between UE2 and communication apparatus 3: Link quality A; Link between UE2 and communication apparatus 4: Link quality B; link between UE2 and communication apparatus 5: Link quality C; and link between UE2 and UE1: Link quality D.

According to an embodiment of the present disclosure, the link quality indication information may include priority information of the link between the user equipment 200 and each communication apparatus. For example, in Figure 3, the link quality indication information generated by UE2 may indicate priorities of the link between UE2 and communication apparatus 3, the link between UE2 and communication apparatus 4, the link between UE2 and communication apparatus 5, and the link between UE2 and UE1.

According to an embodiment of the present disclosure, as shown in Figure 2, the user equipment 200 may further include a measurement unit 240 which is configured to measure the quality of the link between the user equipment 200 and each communication apparatus. As mentioned above, parameters representing the quality of a link include, but are not limited to, SIR, SINR, SNR, RSRP, and RSRQ.

According to an embodiment of the present disclosure, as shown in Figure 2, the user equipment 200 may further include a sorting unit 250 which is configured to sort links according to the quality of the link between the user equipment 200 and each communication apparatus. For example, the sorting unit 250 may sort the links according to the quality from high to low.

According to an embodiment of the present disclosure, as shown in Figure 2, the user equipment 200 may further include a determination unit 260 which is configured to determine priority information of each link based on a sorting result of the sorting unit 250. For example, the determination unit 260 may determine that a link with higher quality has a higher priority level.

That is, in the example shown in Figure 3, the link quality indication information may include the following information: Link between UE2 and communication apparatus 3: Priority N1; Link between UE2 and communication apparatus 4: Priority N2; link between UE2 and communication apparatus 5: Priority N3; and link between UE2 and UE1: Priority N4. Here, N1 to N4 represent non-negative integers, and a smaller value indicates a higher priority. For example, N1 to N4 may be numbers in the range of 0 to 3. For example, the link quality indication information may include the following information: Link between UE2 and communication apparatus 3: Priority 0; Link between UE2 and communication apparatus 4: Priority 1; link between UE2 and communication apparatus 5: Priority 2; and link between UE2 and UE1: Priority 3. In this way, the priority information may be used to replace the link quality information, and thereby the signaling overhead is saved.

According to an embodiment of the present disclosure, the priority information may be explicitly represented as described above, or may be implicitly represented. Here, the priority of the links may be implicitly represented by the order of the links in the link quality indication information. For example, a link ordered high in the link quality indication information has a higher priority.

That is, in the example shown in Figure 3, the link quality indication information may include the following information: Link between UE2 and communication apparatus 3; Link between UE2 and communication apparatus 5; link between UE2 and communication apparatus 4; and link between UE2 and UE1. That is, after receiving such link quality indication information, UE1 may determine that the links are sorted according to priority from high to low as follows: Link between UE2 and communication apparatus 3; Link between UE2 and communication apparatus 5; Link between UE2 and communication apparatus 4; and Link between UE2 and UE1. In this way, the priority information can be represented implicitly, and thereby the signaling overhead is further saved.

According to an embodiment of the present disclosure, in the link quality indication information, the link between the user equipment 200 and the communication apparatus may be represented by an identification of the communication apparatus.

That is, in the example shown in Figure 3, the link quality indication information may include the following information: identification of communication apparatus 3; identification of communication apparatus 5; identification of communication apparatus 4; and identification of UE1. In this way, the priority of each link connected to the user equipment 200 can be clearly indicated with the minimal signaling overhead.

According to an embodiment of the present disclosure, the user equipment 200 may transmit the link quality indication information through MAC layer, RRC layer or physical layer signaling. In transmission of the link quality indication information through the physical layer signaling, a Physical Sidelink Share Channel (PSSCH) may be used to carry the link quality indication information.

According to an embodiment of the present disclosure, after the link quality indication information is generated by the generation unit 210 as described above, the user equipment 200 may transmit the link quality indication information to the counterpart user equipment. Then, the user equipment 200 may receive the link priority indication information from the counterpart user equipment through the communication unit 220, and the link priority indication information is determined according to the link quality indication information.

Here, the link priority indication information may include priority information of a plurality of links between the counterpart user equipment and the user equipment 200. Here, the links between the counterpart user equipment and the user equipment 200 may include a direct link and a non-direct link between the counterpart user equipment and the user equipment 200.

That is, the link priority indication information may indicate priorities of all or part of links among all reachable links between the counterpart user equipment and the user equipment 200. In the example shown in Figure 3, all reachable links between UE1 and UE2 include: UE1→UE2; UE1→communication apparatus 3→UE2; and UE1→communication apparatus 5→UE2. The link priority indication information received by UE2 may indicate the priorities of all or part of the three links.

For example, the link priority indication information may include the following information: Link UE1 → communication apparatus 3 → UE2: priority M1; Link UE1 → communication apparatus 5 → UE2: priority M2; and Link UE1 → UE2: priority M3. Here, M1 to M3 represent non-negative integers, and a smaller value indicates a higher priority. For example, M1 to M3 may be numbers in the range of 0 to 2. For example, the link priority indication information may include the following information: Link UE1 → communication apparatus 3 → UE2: priority 0; Link UE1 → communication apparatus 5 → UE2: priority 1; and Link UE1 → UE2: priority 2.

According to an embodiment of the present disclosure, priorities of the links may be explicitly represented as described above, or may be implicitly represented. Here, the priorities of the links may be implicitly represented by the order of the links in the link priority indication information. For example, a link ordered high in the link priority indication information has a higher priority.

That is, in the example shown in Figure 3, the link priority indication information may include the following information: Link UE1 → communication apparatus 3 → UE2; Link UE1 → communication apparatus 5 → UE2; and Link UE1 → UE2. That is, after receiving such link priority indication information, UE2 may determine that the links are sorted according to priorities from high to low as follows: Link UE1 → communication apparatus 3 → UE2; Link UE1 → communication apparatus 5 → UE2; and Link UE1 → UE2. In this way, the priority information can be represented implicitly, and thereby the signaling overhead is further saved.

According to an embodiment of the present disclosure, in the link priority indication information, a non-direct link may be represented by an identification of the communication apparatus on the non-direct link, and a direct link may be represented by an identification of the counterpart user equipment.

That is, in the example shown in Figure 3, the link priority indication information may include the following information: identification of communication apparatus 3; identification of communication apparatus 5; and identification of UE1. In this way, the priority of each reachable link between the counterpart user equipment and the user equipment 200 can be clearly indicated with the minimal signaling overhead.

According to an embodiment of the present disclosure, the user equipment 200 may receive the link priority indication information through MAC layer, RRC layer or physical layer signaling. When receiving the link priority indication information through the physical layer signaling, the PSSCH may be used for receiving the link priority indication information.

According to an embodiment of the present disclosure, both the counterpart user equipment and the user equipment 200 can store such link priority indication information. In this way, when link switching is needed, the counterpart user equipment and the user equipment 200 can switch links according to the link priority indication information. Therefore, the switching speed is improved and the communication quality is ensured.

According to an embodiment of the present disclosure, the process of the user equipment 200 transmitting the link quality indication information to the counterpart user equipment and the counterpart user equipment transmitting the link priority indication information to the user equipment 200 may be triggered periodically. That is, the user equipment 200 generates the link quality indication information periodically. Preferably, a period thereof is 10ms or 5ms. Here, the period may be configured by the counterpart user equipment, or may be configured by the base station apparatus, or may be pre-configured in the user equipment 200.

Optionally, the process of the user equipment 200 transmitting the link quality indication information to the counterpart user equipment and the counterpart user equipment transmitting the link priority indication information to the user equipment 200 may be triggered dynamically, for example, triggered by the counterpart user equipment or the user equipment 200 using Sidelink Control Information (SCI). Optionally, the process of the user equipment 200 transmitting the link quality indication information to the counterpart user equipment and the counterpart user equipment transmitting the link priority indication information to the user equipment 200 may be triggered semi-statically. For example, it may be stipulated to trigger the process periodically within a period of time, and then stop triggering the process after this period of time.

As mentioned above, the link quality indication information and the link priority indication information are updateable, that is, only a latest version of the link priority indication information is stored in the storage unit 230.

According to an embodiment of the present disclosure, as shown in Figure 2, the user equipment 200 may further include an adjustment unit 290. In a case where the process of the user equipment 200 transmitting the link quality indication information to the counterpart user equipment and the counterpart user equipment transmitting the link priority indication information to the user equipment 200 is triggered periodically, the user equipment 200 may monitor changes in the quality of the direct link between the counterpart user equipment and the user equipment 200. Further, in a case where a rate of change of the quality of the direct link between the counterpart user equipment and the user equipment 200 exceeds a rate threshold range, the adjustment unit 290 may adjust a period for generating the link quality indication information. The rate threshold range here may include an upper limit and a lower limit. For example, in a case where the rate of change of the quality of the direct link between the counterpart user equipment and the user equipment 200 is greater than the upper limit of the rate threshold range, the adjustment unit 290 may adjust the current period to be shorter. In a case where the rate of change of the quality of the direct link between the counterpart user equipment and the user equipment 200 is less than the lower limit of the rate threshold range, the adjustment unit 290 may adjust the current period to be longer. Here, the user equipment 200 may monitor the quality of the direct link, and thereby the rate of change of the quality of the direct link may be represented by a change amount of the quality of the direct link per unit time.

In a case where the link quality indication information is generated periodically, there may be a situation where the period for generating the link quality indication information does not match a communication environment around the counterpart user equipment and the user equipment 200. For example, during the time interval between two generations of the link quality indication information, the location of the counterpart user equipment or the user equipment 200 changes significantly, or the communication apparatus capable of forwarding data is no longer able to provide services, resulting in a significant change in the communication environment. In this case, the generated link quality indication information is no longer accurate, and the link priority indication information is no longer accurate accordingly. In another example, locations of the counterpart user equipment and the user equipment 200 and the surrounding communication environment are relatively stable. In this case, if the period for generating the link quality indication information is too short, information will be exchanged too frequently and signaling overhead will increase. According to an embodiment of the present disclosure, the period for generating the link quality indication information may be adjusted based on a rate of change of the quality of the link, so that the period can better match the surrounding communication environment, and the generated link quality indication information and link priority indication information are more accurate. Therefore, the signaling overhead is controlled while ensuring link reliability.

According to an embodiment of the present disclosure, as shown in Figure 3, the user equipment 200 may further include a judgment unit 270 that is configured to determine whether a quality of a direct link between the counterpart user equipment and the user equipment 200 meets a switching condition, that is, to determine whether the quality of the direct link has dropped to a certain level and link switching is therefore needed.

According to an embodiment of the present disclosure, in a case where the counterpart user equipment and the user equipment 200 communicate with each other by using a direct link, the measurement unit 240 may measure the quality of the direct link periodically, or dynamically, or semi-statically. Further, in a case where the number of times that the quality of the direct link is less than a quality threshold within a predetermined time window is greater than a threshold of the number of times, the judgment unit 270 may determine that the quality of the direct link meets the switching condition. For example, the judgment unit 270 may be provided with a counter having an initial value of 0. Within the predetermined time window, the counter is incremented by 1 each time the quality of the direct link is less than the quality threshold. Within the predetermined time window, when the value of the counter is greater than the threshold of the number of times, the judgment unit 270 determines that the quality of the direct link meets the switching condition; and when the value of the counter is less than or equal to the threshold of the number of times, the counter is cleared. Here, the length of the predetermined time window, the threshold of the number of times, and the quality threshold may be configured by the counterpart user equipment, or may be configured by the user equipment 200, or may be configured by the base station apparatus, or may be pre-configured in the user equipment 200.

According to an embodiment of the present disclosure, as shown in Figure 2, the user equipment 200 may further include a switching unit 280. In a case where the judgment unit 270 determines that the quality of the direct link between the counterpart user equipment and the user equipment 200 meets the switching condition, the switching unit 280 may switch the direct link according to the link priority indication information. For example, the switching unit 280 may cause the user equipment 200 to switch to a link having the highest priority in the link priority indication information, to communicate with the counterpart user equipment. In this case, the generation unit 210 may further generate a switching notification, and the user equipment 200 may transmit the switching notification to the counterpart user equipment through the communication unit 220, to notify the counterpart user equipment to switch to the link having the highest priority to communicate with the user equipment 200. Here, since the counterpart user equipment stores the same link priority indication information as the link priority indication information stored in the user equipment 200, the switching notification may include only 1 bit of information for indicating the switching operation. The counterpart user equipment switches to the link having the highest priority based on the link priority indication information stored thereon. Here, the user equipment 200 may transmit the switching notification through SCI.

As described above, according to an embodiment of the present disclosure, it may be determined by the user equipment 200 whether to switch the direct link. Furthermore, when the direct link needs to be switched, the link switching may be performed directly according to the latest version of the link priority indication information in the user equipment 200, without the need to perform measuring, reporting and other operations on the link. Therefore, switching time is saved, and a communication quality between the counterpart user equipment and the user equipment 200 is ensured.

According to an embodiment of the present disclosure, the user equipment 200 may receive a switching notification from the counterpart user equipment through the communication unit 220. For example, the switching notification may only include 1 bit of information for indicating the switching operation. Here, the user equipment 200 may receive the switching notification through SCI. Further, the judgment unit 270 determines, according to the switching notification, that the quality of the direct link meets the switching condition, and thereby the switching unit 280 performs the switching as described above.

As described above, according to an embodiment of the present disclosure, it may be determined by the counterpart user equipment whether to switch the direct link. Furthermore, when the direct link needs to be switched, the link switching may be performed directly according to the latest version of the link priority indication information in the user equipment 200, without the need to perform measuring, reporting and other operations on the link. Therefore, switching time is saved, and a communication quality between the counterpart user equipment and the user equipment 200 is ensured.

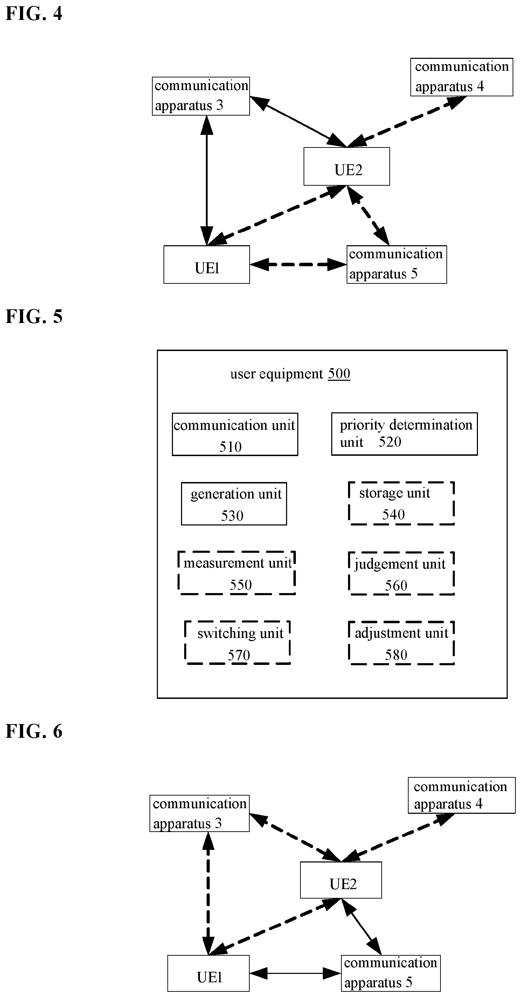

Figure 4 is a schematic diagram showing a scenario of switching a communication link between UE1 and UE2 according to an embodiment of the present disclosure. In Figure 4, UE2 may be implemented by the user equipment 200, and UE1 serves as transmitting end user equipment. Here, it is assumed that the link priority indication information indicates that the links are sorted according to priorities from high to low as follows: Link UE1 → communication apparatus 3 → UE2; Link UE1 → communication apparatus 5 → UE2; and Link UE1 → UE2. As shown in Figure 4, the link is switched to UE1→communication apparatus 3-UE2 when the direct link between UE1 and UE2 meets the switching condition. That is, information of UE1 is forwarded to UE2 through the communication apparatus 3. Thus, the communication quality between UE1 and UE2 can be guaranteed.

According to an embodiment of the present disclosure, the counterpart user equipment and another communication apparatus may communicate with each other by using beam forming, and the other communication apparatus and the user equipment 200 may communicate with each other also by beam forming. In the links indicated by the link priority indication information, the communication apparatus that performs forwarding is a communication apparatus that has established connection with the counterpart user equipment and the user equipment 200, and therefore beam pairs are determined. That is, the communication apparatus that performs forwarding may adopt beam pairs determined previously to communicate with the counterpart user equipment and the user equipment 200.

As can be seen, according to an embodiment of the present disclosure, the user equipment 200 may receive the link priority indication information from the counterpart user equipment. The link priority indication information includes priority information of a plurality of links between the counterpart user equipment and the user equipment 200. Therefore, both the counterpart user equipment and the user equipment 200 can store the priority information of the links. In addition, the link priority indication information can be updated. Further, the user equipment 200 or the counterpart user equipment may determine whether the direct link needs to be switched, and may perform link switching according to the link priority indication information, without the need for measurement, reporting, recovery, and other operations on the link. In this way, fast switching of links is implemented and communication quality of the link between the user equipment is ensured.

### <3. Exemplary configuration of user equipment on transmitting end>

Figure 5 is a block diagram illustrating a structure of user equipment 500 in a wireless communication system according to an embodiment of the present disclosure. Here, the user equipment 500 may be transmitting end user equipment in SL communication.

As shown in Figure 5, the user equipment 500 may include a communication unit 510, a priority determination unit 520, and a generation unit 530.

Here, units of the user equipment 500 may be included in processing circuitry. It should be noted that the user equipment 500 may include a single processing circuit or multiple processing circuits. Further, the processing circuitry may include various discrete functional units for performing various different functions and/or operations. It should be noted that these functional units may be physical entities or logical entities, and units with different names may be implemented by the same physical entity.

According to an embodiment of the present disclosure, the user equipment 500 may receive link quality indication information from counterpart user equipment through the communication unit 510, the link quality indication information indicating a quality of a link between the counterpart user equipment and each of multiple communication apparatuses. Here, the counterpart user equipment may be receiving end user equipment in SL communication.

According to an embodiment of the present disclosure, the priority determination unit 520 may determine, according to the received link quality indication information, priority information of a plurality of links between the user equipment 500 and the counterpart user equipment.

According to an embodiment of the present disclosure, the generation unit 530 may generate link priority indication information, which includes the priority information of a plurality of links determined by the priority determination unit 520. Further, the user equipment 500 may transmit the link priority indication information to the counterpart user equipment through the communication unit 510.

As can be seen, according to an embodiment of the present disclosure, the user equipment 500 may transmit the link priority indication information to the counterpart user equipment. The link priority indication information includes the priority information of a plurality of links between the user equipment 500 and the counterpart user equipment. Further, link switching, when needed, may be performed according to the link priority indication information, without the need for measurement, reporting, recovery, and other operations on the link. In this way, fast switching of links is implemented and communication quality of the link between the user equipment is ensured.

According to an embodiment of the present disclosure, as shown in Figure 5, the user equipment 500 may further include a storage unit 540, for storing the link priority indication information.

According to an embodiment of the present disclosure, the user equipment 500 may receive the link quality indication information from the counterpart user equipment after a link is established between the user equipment 500 and the counterpart user equipment.

According to an embodiment of the present disclosure, in a case where the user equipment 500 and the counterpart user equipment communicate with each other by beam forming, a link may be established through a beam scanning process between the user equipment 500 and the counterpart user equipment. Specifically, the user equipment 500 may determine the best beam pair between the user equipment 500 and the counterpart user equipment through a beam scanning process, and then use the best beam pair to perform SL communication through the direct link.

According to an embodiment of the present disclosure, in a case where the user equipment 500 and the counterpart user equipment are both located within a coverage of a base station apparatus, the base station apparatus may configure part of the beam for beam scanning based on locations of the user equipment 500 and the counterpart user equipment (optionally, further based on movement information of the user equipment 500 and the counterpart user equipment, such as movement speed and movement direction). In this way, the user equipment 500 can perform partial beam scanning, and the counterpart user equipment can perform partial beam scanning pairing. Therefore, a time period taken for the beam scanning process is reduced. Further, in a case where the user equipment 500 or the counterpart user equipment is located outside the coverage of the base station apparatus, the user equipment 500 may perform omnidirectional beam scanning, and the counterpart user equipment may perform omnidirectional beam scanning pairing.

According to an embodiment of the present disclosure, the user equipment 500 may receive the link quality indication information through MAC layer, RRC layer or physical layer signaling. When receiving the link quality indication information through the physical layer signaling, the PSSCH may be used for receiving the link quality indication information.

According to an embodiment of the present disclosure, the priority determination unit 520 may determine the quality of each link between the user equipment 500 and the counterpart user equipment. Here, the links may include a direct link and a non-direct link between the user equipment 500 and the counterpart user equipment. That is, the user equipment 500 may determine all reachable links between the user equipment 500 and the counterpart user equipment. For example, the user equipment 500 may be aware of the communication apparatus that have established connection with the user equipment 500, and may determine the communication apparatus that have established connection with the counterpart user equipment based on the link quality indication information. Therefore, all reachable links can be determined based on the communication apparatus that have established connection with the user equipment 500 and the communication apparatus that have established connection with the counterpart user equipment. For example, in the example shown in Figure 3, according to the link quality indication information transmitted by UE2, UE1 may determine that UE2 has established connection with the communication apparatus 3, communication apparatus 4, and communication apparatus 5, and UE1 is aware that UE2, communication apparatus 3, and communication apparatus 5 have established connection with UE1. Therefore, it can be determined that all reachable links between UE1 and UE2 include: Link UE1 → communication apparatus 3 → UE2; Link UE1 → communication apparatus 5 → UE2; and Link UE1 → UE2. The first two links are non-direct links, and the last link is a direct link.

According to an embodiment of the present disclosure, as shown in Figure 5, the user equipment 500 may further include a measurement unit 550 that is configured to measure a quality of a link between the user equipment 500 and a communication apparatus. For example, the measurement unit 550 may measure a quality of a direct link between the user equipment 500 and the counterpart user equipment. Furthermore, the measurement unit 550 may measure the quality of the link between the user equipment 500 and each communication apparatus on the non-direct link, and the priority determination unit 520 may determine the quality of the link between each communication apparatus on the non-direct link and the counterpart user equipment based on the link quality indication information from the counterpart user equipment. Therefore, the quality of the non-direct link can be determined based on the quality of the link between the user equipment and each communication apparatus on the non-direct link and the quality of the link between the communication apparatus and the counterpart user equipment.

According to an embodiment of the present disclosure, the priority determination unit 520 may determine the quality of the entire link by comprehensively considering the quality of the link between the user equipment 500 and the communication apparatus and the quality of the link between the communication apparatus and the counterpart user equipment. For example, the priority determination unit 520 may determine a weighted sum of the quality of the link between the user equipment 500 and the communication apparatus and the quality of the link between the communication apparatus and the counterpart user equipment as the quality of the entire link. A weight for each link may be determined by the user equipment 500 based on the importance of the link. Optionally, the priority determination unit 520 may determine the quality of the entire link based on the quality of the link between the user equipment 500 and the communication apparatus. For example, the user equipment 500 is relatively busy, and therefore it is expected to use a communication apparatus having better link quality to forward data of the user equipment 500. Optionally, the priority determination unit 520 may determine the quality of the entire link based on only the quality of the link between the communication apparatus and the counterpart user equipment. For example, the counterpart user equipment 500 is relatively busy, and therefore it is expected to use a communication apparatus having better link quality to forward data to the counterpart user equipment 500.

A method that the priority determination unit 520 determines the quality of each reachable link between the user equipment 500 and the counterpart user equipment is not limited in the present disclosure. That is, the priority determination unit 520 may determine the quality of each reachable link based on a measurement result of the measurement unit 550 and the link quality indication information from the counterpart user equipment.

According to an embodiment of the present disclosure, the priority determination unit 520 may sort multiple reachable links based on qualities of the reachable links. For example, a reachable link having better quality is ranked higher in the sorting. Further, the priority determination unit 520 may determine priority information of the links according to a sorting result. For example, a link that is ranked higher has a higher priority. That is, the priority determination unit 520 may sort the reachable links based on qualities of the reachable links, so that a link having better quality has a higher priority.

According to an embodiment of the present disclosure, after the priority determination unit 520 determines the priority of each reachable link, the generation unit 530 may generate link priority indication information. The link priority indication information includes priority of each reachable link. As shown in the example in Figure 3, the link priority indication information may include the following information: Link UE1 → communication apparatus 3 → UE2: priority M1; Link UE1 → communication apparatus 5 → UE2: priority M2; and Link UE1 → UE2: priority M3. Here, M1 to M3 represent non-negative integers, and a smaller value indicates a higher priority. For example, M1 to M3 may be numbers in the range of 0 to 2. For example, the link priority indication information may include the following information: Link UE1 → communication apparatus 3 → UE2: priority 0; Link UE1 → communication apparatus 5 → UE2: priority 1; and Link UE1 → UE2: priority 2.

According to an embodiment of the present disclosure, priorities of the links may be explicitly represented as described above, or may be implicitly represented. Here, the priorities of the links may be implicitly represented by the order of the links in the link priority indication information. For example, a link ordered high in the link priority indication information has a higher priority.

That is, in the example shown in Figure 3, the link priority indication information may include the following information: Link UE1 → communication apparatus 3 → UE2; Link UE1 → communication apparatus 5 → UE2; and Link UE1 → UE2. That is, after receiving such link priority indication information, UE2 may determine that the links are sorted according to priorities from high to low as follows: Link UE1 → communication apparatus 3 → UE2; Link UE1 → communication apparatus 5 → UE2; and Link UE1 → UE2. In this way, the priority information can be represented implicitly, and thereby the signaling overhead is further saved.

According to an embodiment of the present disclosure, in the link priority indication information, a non-direct link may be represented by an identification of the communication apparatus on the non-direct link, and a direct link may be represented by an identification of the user equipment 500.

That is, in the example shown in Figure 3, the link priority indication information may include the following information: identification of communication apparatus 3; identification of communication apparatus 5; and identification of UE1. In this way, the priority of each reachable link between the user equipment 500 and the counterpart user equipment can be clearly indicated with the minimal signaling overhead.

According to an embodiment of the present disclosure, the user equipment 500 may transmit the link priority indication information through MAC layer, RRC layer or physical layer signaling. When transmitting the link priority indication information through the physical layer signaling, the PSSCH may be used for transmitting the link priority indication information.

As mentioned above, according to an embodiment of the present disclosure, the process of the user equipment 500 receiving the link quality indication information from the counterpart user equipment and the user equipment 500 transmitting the link priority indication information to the counterpart user equipment may be triggered periodically, or dynamically, or semi-statically. In other words, the link quality indication information and the link priority indication information are updateable, that is, only a latest version of the link priority indication information is stored in the storage unit 540.

According to an embodiment of the present disclosure, as shown in Figure 5, the user equipment 500 may further include an adjustment unit 580. In a case where the process of the user equipment 500 receiving the link quality indication information from the counterpart user equipment and the user equipment 500 transmitting the link priority indication information to the counterpart user equipment is triggered periodically, the user equipment 500 may monitor changes in the quality of the direct link between the user equipment 500 and the counterpart user equipment. Further, in a case where a rate of change of the quality of the direct link between the user equipment 500 and the counterpart user equipment exceeds a rate threshold range, the adjustment unit 580 may adjust a period for generating the link quality indication information by the counterpart user equipment. For example, in a case where the rate of change of the quality of the direct link between the user equipment 500 and the counterpart user equipment is greater than the upper limit of the rate threshold range, the adjustment unit 580 may adjust the current period to be shorter. In a case where the rate of change of the quality of the direct link between the user equipment 500 and the counterpart user equipment is less than the lower limit of the rate threshold range, the adjustment unit 580 may adjust the current period to be longer. Here, the user equipment 500 may monitor the quality of the direct link, and thereby the rate of change of the quality of the direct link may be represented by a change amount of the quality of the direct link per unit time.

According to an embodiment of the present disclosure, both the user equipment 500 and the counterpart user equipment can monitor the quality of the direct link, and adjust the period for generating the link quality indication information based on the quality of the direct link.

According to an embodiment of the present disclosure, as shown in Figure 5, the user equipment 500 may further include a judgment unit 560 that is configured to determine whether a quality of a direct link between the user equipment 500 and the counterpart user equipment meets a switching condition.

According to an embodiment of the present disclosure, in a case where the user equipment 500 and the counterpart user equipment communicate with each other by using a direct link, the measurement unit 550 may measure the quality of the direct link periodically, or dynamically, or semi-statically. Further, in a case where the number of times that the quality of the direct link is less than a quality threshold within a predetermined time window is greater than a threshold of the number of times, the judgment unit 560 may determine that the quality of the direct link meets the switching condition. For example, the judgment unit 560 may be provided with a counter having an initial value of 0. Within the predetermined time window, the counter is incremented by 1 each time the quality of the direct link is less than the quality threshold. Within the predetermined time window, when the value of the counter is greater than the threshold of the number of times, the judgment unit 560 determines that the quality of the direct link meets the switching condition; and when the value of the counter is less than or equal to the threshold of the number of times, the counter is cleared. Here, the length of the predetermined time window, the threshold of the number of times, and the quality threshold may be configured by the user equipment 500, or may be configured by the counterpart user equipment, or may be configured by the base station apparatus, or may be pre-configured in the user equipment 500.

According to an embodiment of the present disclosure, as shown in Figure 5, the user equipment 500 may further include a switching unit 570. In a case where the judgment unit 560 determines that the quality of the direct link between the user equipment 500 and the counterpart user equipment meets the switching condition, the switching unit 570 may switch the direct link according to the link priority indication information. For example, the switching unit 570 may cause the user equipment 500 to switch to a link having the highest priority in the link priority indication information, to communicate with the counterpart user equipment. In this case, the generation unit 530 may further generate a switching notification, and the user equipment 500 may transmit the switching notification to the counterpart user equipment through the communication unit 510, to notify the counterpart user equipment to switch to the link having the highest priority to communicate with the user equipment 500. Here, since the counterpart user equipment stores the same link priority indication information as the link priority indication information stored in the user equipment 500, the switching notification may include only 1 bit of information for indicating the switching operation. The counterpart user equipment switches to the link having the highest priority based on the link priority indication information stored thereon. Here, the user equipment 500 may transmit the switching notification through SCI.

According to an embodiment of the present disclosure, the user equipment 500 may receive a switching notification from the counterpart user equipment through the communication unit 510. For example, the switching notification may include only 1 bit of information for indicating the switching operation. Here, the user equipment 500 may receive the switching notification through SCI. Further, the judgment unit 560 determines, according to the switching notification, that the quality of the direct link meets the switching condition, and thereby the switching unit 570 performs the switching as described above.

As described above, according to an embodiment of the present disclosure, it may be determined by the transmitting end user equipment whether to switch the direct link, or it may be determined by the receiving end user equipment whether to switch the direct link.

According to an embodiment of the present disclosure, after communicating with the counterpart user equipment using the link having the highest priority, the user equipment 500 may determine whether the communication fails. For example, it may be stipulated that the counterpart user equipment needs to transmit an ACK message to the user equipment 500 when receiving data from the user equipment 500. In a case where no ACK message of the counterpart user equipment with respect to the data of the user equipment 500 is received from the communication apparatus on the link having the highest priority within a predetermined time, the user equipment 500 may determine that the communication fails. Optionally, in a case where the communication apparatus on the link having the highest priority fails to receive the ACK message of the counterpart user equipment with respect to the data of the user equipment 500 within the predetermined time, the communication apparatus may transmit a notification to the user equipment 500 indicating failure of the communication. That is, the user equipment 500 may determine that the communication fails in a case where the user equipment 500 receives the notification indicating failure of the communication from the communication apparatus.

According to an embodiment of the present disclosure, in a case where the user equipment 500 determines that the communication with the counterpart user equipment using the link having the highest priority fails, the switching unit 570 may switch to a link having the second highest priority to communicate with the counterpart user equipment.

As mentioned above, according to the embodiment of the present disclosure, in a case where the quality of the direct link between the user equipment 500 and the counterpart user equipment decreases and switching is needed, it is possible to switch to the link having the highest priority indicated in the link priority indication information. Further, in a case where the communication using the link having the highest priority fails, it is possible to switch to the link having the second highest priority indicated in the link priority indication information. Apparently, in a case where the communication using the link having the highest priority fails, if the link priority indication information is updated (that is, the link having the highest priority indicated in the latest version of the priority indication information is different from the previous one), it is possible to switch to the link having the highest priority indicated in the latest version of the link priority indication information. In summary, according to the embodiment of the present disclosure, the link for communication between the user equipment 500 and the counterpart user equipment may be switched according to the priorities of links indicated in the link priority indication information. In this way, the switching speed is improved and the link quality is ensured.

Figure 6 is a schematic diagram showing a scenario of switching a communication link between UE1 and UE2 again according to an embodiment of the present disclosure. In Figure 6, UE2 may be implemented by the user equipment 200, and UE1 may be implemented by the user equipment 500. Here, it is assumed that the link priority indication information indicates that the links are sorted according to priorities from high to low as follows: Link UE1 → communication apparatus 3 → UE2; Link UE1 → communication apparatus 5 → UE2; and Link UE1 → UE2. As shown in Figure 6, in a case where the communication fails after switching to link UE1→communication apparatus 3→UE2, the link is further switched to link UE1→communication apparatus 5→UE-2. That is, information of UE1 is forwarded to UE2 through the communication apparatus 5. Thus, the communication quality between UE1 and UE2 can be guaranteed.

As can be seen, according to an embodiment of the present disclosure, the user equipment 500 may generate the link priority indication information according to the link quality indication information of the counterpart user equipment. The link priority indication information includes the priority information of a plurality of links between the user equipment 500 and the counterpart user equipment. Therefore, both the user equipment 500 and the counterpart user equipment can store the priority information of the links. In addition, the link priority indication information can be updated. Further, the user equipment 500 or the counterpart user equipment may determine whether the direct link needs to be switched, and may perform link switching according to the link priority indication information, without the need for measurement, reporting, recovery, and other operations on the link. In this way, fast switching of links is implemented and communication quality of the link between the user equipment is ensured. In addition, the user equipment 500 may switch the link again according to the link priority indication information depending on whether the communication fails.

In addition, although the user equipment 200 on the receiving end and the user equipment 500 on the transmitting end are described with reference to Figure 2 and Figure 5 respectively, the user equipment 200 may further serve as a transmitter in other SL communications, and the user equipment 500 may serve as a receiver in other SL communications. Therefore, the user equipment according to the embodiments of the present disclosure may have all the functions of the user equipment 200 and the user equipment 500, where a unit having the same function in Figure 2 and Figure 5 may be configured only once in the user equipment. In other words, the user equipment according to the embodiment of the present disclosure may include the generation unit 210, the communication unit 220, the storage unit 230, the measurement unit 240, the sorting unit 250, the determination unit 260, the judgment unit 270, the switching unit 280, the adjustment unit 290, and the priority determination unit 520.

### <4. Method embodiment>

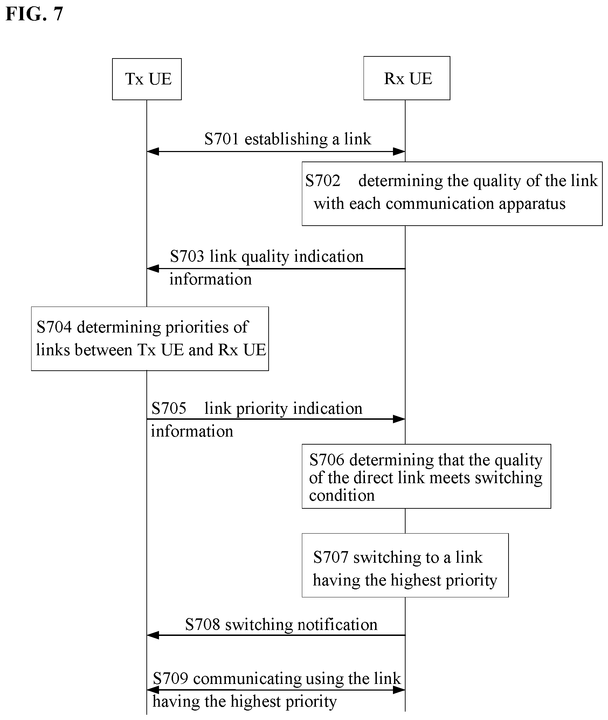

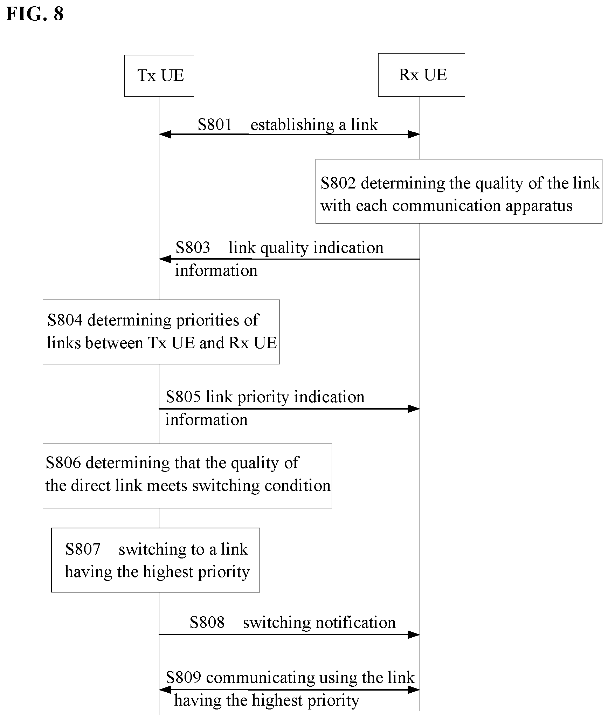

Diagrams of a signaling flow for link switching using link priority indication information according to embodiments of the present disclosure are described below in conjunction with Figure 7 and Figure 8. In Figure 7 and Figure 8, Tx UE represents transmitting end user equipment and may be implemented by the user equipment 500, and Rx UE represents receiving end user equipment and may be implemented by the user equipment 200.

As shown in Figure 7, in step S701, the Tx UE and the Rx UE establish a link, that is, determine a beam pair through a beam scanning process, and thereby communicate with each other through a direct link using an optimal beam pair. In step S702, the Rx UE determines the quality of the link with each of multiple communication apparatuses which have established links with the Rx UE. In step S703, the Rx UE transmits link quality indication information to the Tx UE. In step S704, the Tx UE determines priorities of links between the Tx UE and the Rx UE according to the link quality indication information from the Rx UE and a measurement result of the Tx UE, and generates link priority indication information. In step S705, the Tx UE transmits the link priority indication information to the Rx UE. In step S706, the Rx UE determines that the quality of the direct link meets a switching condition. In step S707, the Rx UE switches to a link having the highest priority indicated in the link priority indication information to communicate with the Tx UE. In step S708, the Rx UE transmits a switching notification to the Tx UE to notify the Tx UE to switch to the link having the highest priority. In step S709, the Tx UE and the Rx UE communicate with each other using the link having the highest priority. As shown in Figure 7, the Rx UE determines that link switching is needed, and the Tx UE and the Rx UE switch to the link having the highest priority for communication.

As shown in Figure 8, in step S801, the Tx UE and the Rx UE establish a link, that is, determine a beam pair through a beam scanning process, and thereby communicate with each other through a direct link using an optimal beam pair. In step S802, the Rx UE determines the quality of the link with each of multiple communication apparatuses which have established links with the Rx UE. In step S803, the Rx UE transmits link quality indication information to the Tx UE. In step S804, the Tx UE determines priorities of links between the Tx UE and the Rx UE according to the link quality indication information from the Rx UE and a measurement result of the Tx UE, and generates link priority indication information. In step S805, the Tx UE transmits the link priority indication information to the Rx UE. In step S806, the Tx UE determines that the quality of the direct link meets a switching condition. In step S807, the Tx UE switches to a link having the highest priority indicated in the link priority indication information to communicate with the Rx UE. In step S808, the Tx UE transmits a switching notification to the Rx UE to notify the Rx UE to switch to the link having the highest priority. In step S809, the Tx UE and the Rx UE communicate with each other using the link having the highest priority. As shown in Figure 8, the Tx UE determines that link switching is needed, and the Tx UE and the Rx UE switch to the link having the highest priority for communication.

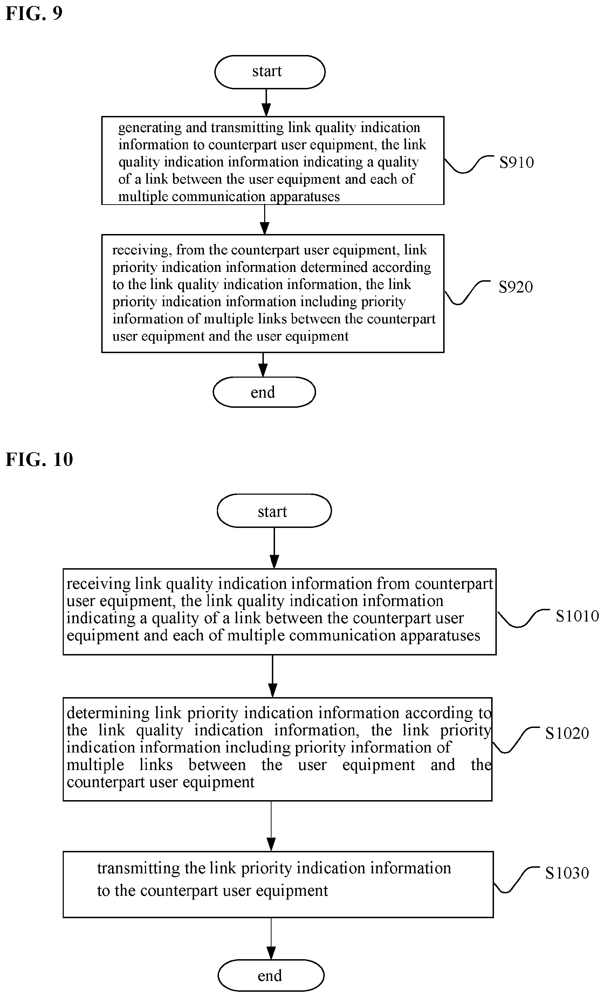

Next, a wireless communication method performed by user equipment 200 in a wireless communication system according to an embodiment of the present disclosure is described in detail. Figure 9 is a flowchart illustrating a wireless communication method performed by user equipment 200 in a wireless communication system according to an embodiment of the present disclosure.

As shown in Figure 9, in step S910, link quality indication information is generated and transmitted to counterpart user equipment, the link quality indication information indicating the quality of a link between the user equipment 200 and each of a plurality of communication apparatuses.

Next, in step S920, link priority indication information determined according to the link quality indication information is received from the counterpart user equipment, the link priority indication information including priority information of a plurality of links between the counterpart user equipment and the user equipment 200.

Preferably, the link quality indication information includes priority information of the link between the user equipment 200 and each communication apparatus.

Preferably, the wireless communication method further includes: measuring the quality of the link between the user equipment 200 and each communication apparatus; sorting the link between the user equipment 200 and each communication apparatus according to a measurement result; and determining the priority information of the link between the user equipment 200 and each communication apparatus according to a sorting result.

Preferably, the wireless communication method further includes: representing the link between the user equipment 200 and the communication apparatus by an identification of the communication apparatus.

Preferably, the plurality of communication apparatuses are communication apparatuses that have established connections with the user equipment 200, and the plurality of communication apparatuses are user equipment, road side units or intelligent reflecting surfaces.

Preferably, the links between the counterpart user equipment and the user equipment 200 may include a direct link and a non-direct link between the counterpart user equipment and the user equipment 200.

Preferably, the wireless communication method further includes switching to a link having the highest priority to communicate with the counterpart user equipment, in a case where the quality of a direct link between the counterpart user equipment and the user equipment 200 meets a switching condition.

Preferably, the wireless communication method further includes determining that the quality of the direct link meets the switching condition, in a case where the number of times that the quality of the direct link is less than a quality threshold within a predetermined time window is greater than a threshold of the number of times.

Preferably, the wireless communication method further includes transmitting a switching notification to the counterpart user equipment on determining that the quality of the direct link meets the switching condition, to notify the counterpart user equipment to switch to the link having the highest priority to communicate with the user equipment 200.

Preferably, the wireless communication method further includes receiving the switching notification from the counterpart user equipment, and determining, based on the switching notification, that the quality of the direct link meets the switching condition.

Preferably, the wireless communication method further includes generating the link quality indication information periodically.

Preferably, the wireless communication method further includes adjusting a period for generating the link quality indication information, in a case where a rate of change of the quality of the direct link between the counterpart user equipment and the user equipment 200 exceeds a rate threshold range.

According to an embodiment of the present disclosure, a subject that performs the method may be the user equipment 200 according to the embodiment of the present disclosure. Therefore, the previous embodiments of the user equipment 200 are applicable here.

Next, a wireless communication method performed by user equipment 500 in a wireless communication system according to an embodiment of the present disclosure is described in detail. Figure 10 is a flowchart illustrating a wireless communication method performed by user equipment 500 in a wireless communication system according to an embodiment of the present disclosure.

As shown in Figure 10, in step S1010, link quality indication information is received from counterpart user equipment, the link quality indication information indicating a quality of a link between the counterpart user equipment and each of a plurality of communication apparatuses.

Next, in step S1020, link priority indication information is determined according to the link quality indication information, the link priority indication information including priority information of a plurality of links between the user equipment 500 and the counterpart user equipment.

Next, in step S1030, the link priority indication information is transmitted to the counterpart user equipment.

Preferably, the wireless communication method further includes determining the quality of each link between the user equipment 500 and the counterpart user equipment; sorting the links according to a determination result, and determining the priority information of the links according to a sorting result.

Preferably, the links include a direct link and a non-direct link between the user equipment 500 and the counterpart user equipment, and the wireless communication method further includes determining the quality of the non-direct link based on the quality of the link between the user equipment 500 and a communication apparatus on each non-direct link and the quality of the link between the communication apparatus and the counterpart user equipment.

Preferably, the wireless communication method further includes representing the non-direct link by an identification of the communication apparatus on the non-direct link.

Preferably, the wireless communication method further includes switching to a link having the highest priority to communicate with the counterpart user equipment, in a case where the quality of a direct link between the user equipment 500 and the counterpart user equipment meets a switching condition.

Preferably, the wireless communication method further includes determining that the quality of the direct link meets the switching condition, in a case where the number of times that the quality of the direct link is less than a quality threshold within a predetermined time window is greater than a threshold of the number of times.

Preferably, the wireless communication method further includes transmitting a switching notification to the counterpart user equipment on determining that the quality of the direct link meets the switching condition, to notify the counterpart user equipment to switch to the link having the highest priority to communicate with the user equipment 500.

Preferably, the wireless communication method further includes receiving the switching notification from the counterpart user equipment, and determining, based on the switching notification, that the quality of the direct link meets the switching condition.

Preferably, the wireless communication method further includes receiving the link quality indication information periodically.

Preferably, the wireless communication method further includes adjusting a period for generating the link quality indication information by the counterpart user equipment, in a case where a rate of change of the quality of the direct link between the user equipment 500 and the counterpart user equipment exceeds a rate threshold range.

Preferably, the wireless communication method further includes switching to a link having the second highest priority to communicate with the counterpart user equipment, in a case where the communication with the counterpart user equipment using the link having the highest priority fails.

Preferably, the wireless communication method further includes determining that the communication fails in a case where no ACK message with respect to data of the user equipment 500 is received from the counterpart user equipment within a predetermined time.

Preferably, the wireless communication method further includes receiving a notification indicating failure of the communication from a communication apparatus on the link having the highest priority.

According to an embodiment of the present disclosure, a subject that performs the method may be the user equipment 500 according to the embodiment of the present disclosure. Therefore, the previous embodiments of the user equipment 500 are applicable here.

### <5. Application example>

The technology of the present disclosure can be applied to various products.

For example, the user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications, which is also referred to as a machine type communication (MTC) terminal. Furthermore, the user equipment may be a wireless communication module (such as an integrated circuit module including a single chip) installed on each user equipment described above.

### <Application examples of terminal equipment>

### (First Application Example)

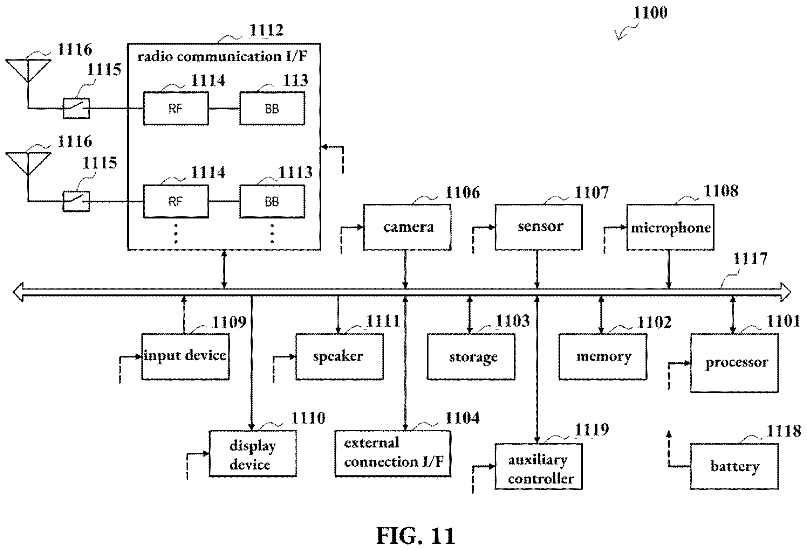

Figure 11 is a block diagram showing an example of a schematic configuration of a smart phone 1100 to which the technology of the present disclosure may be applied. The smart phone 1100 includes a processor 1101, a memory 1102, a storage device 1103, an external connection interface 1104, a camera 1106, a sensor 1107, a microphone 1108, an input device 1109, a display device 1110, a speaker 1111, a radio communication interface 1112, one or more antenna switches 1115, one or more antennas 1116, a bus 1117, a battery 1118, and an auxiliary controller 1119.

The processor 1101 may be, for example, a CPU or a system on a chip (SoC), and controls the functions of the application layer and other layers of the smart phone 1100. The memory 1102 includes an RAM and an ROM, and stores data and programs executed by the processor 1101. The storage device 1103 may include a storage medium, such as a semiconductor memory and a hard disk. The external connection interface 1104 is an interface for connecting an external device (such as a memory card and a universal serial bus (USB) device) to the smart phone 1100.

The camera 1106 includes an image sensor (such as a charge coupled device (CCD) and a complementary metal oxide semiconductor (CMOS)), and generates a captured image. The sensor 1107 may include a group of sensors, such as a measurement sensor, a gyroscope sensor, a geomagnetic sensor, and an acceleration sensor. The microphone 1108 converts sound inputted to the smart phone 1100 into an audio signal. The input device 1109 includes, for example, a touch sensor configured to detect a touch on a screen of the display device 1110, a keypad, a keyboard, a button, or a switch, and receives an operation or information inputted from a user. The display device 1110 includes a screen, such as a liquid crystal display (LCD) or an organic light emitting diode (OLED) display, and displays an output image of the smart phone 1100. The speaker 1111 converts the audio signal outputted from the smart phone 1100 into sound.

The radio communication interface 1112 supports any cellular communication scheme (such as LTE and LTE-Advanced), and performs wireless communications. The radio communication interface 1112 may generally include, for example, a BB processor 1113 and an RF circuit 1114. The BB processor 1113 may perform, for example, encoding/decoding, modulation/demodulation, and multiplexing/demultiplexing, and perform various types of signal processing for wireless communications. In addition, the RF circuit 1114 may include, for example, a mixer, a filter and an amplifier, and transmit and receive a wireless signal via the antenna 1116. The radio communication interface 1112 may be a chip module on which the BB processor 1113 and the RF circuit 1114 are integrated. As shown in Figure 11, the radio communication interface 1112 may include multiple BB processors 1113 and multiple RF circuits 1114. Although Figure 11 shows an example in which the radio communication interface 1112 includes multiple BB processors 1113 and multiple RF circuits 1114, the wireless communication interface 1112 may include a single BB processor 1113 or a single RF circuit 1114.

In addition to the cellular communication scheme, the radio communication interface 1112 may support another type of wireless communication scheme, such as a short-range wireless communication scheme, a near field communication scheme, and a wireless local area network (LAN) scheme. In this case, the radio communication interface 1112 may include a BB processor 1113 and an RF circuit 1114 for each wireless communication scheme.

Each of the antenna switches 1115 switches a connection destination of the antenna 1116 among multiple circuits (for example, circuits for different wireless communication schemes) included in the radio communication interface 1112.

Each of the antennas 1116 includes a single or multiple antenna elements (such as multiple antenna elements included in a MIMO antenna), and is configured for the radio communication interface 1112 to transmit and receive wireless signals. As shown in Figure 11, the smart phone 1100 may include multiple antennas 1116. Although Figure 11 shows an example in which the smart phone 1100 includes multiple antennas 1116, the smart phone 1100 may include a single antenna 1116.

In addition, the smart phone 1100 may include antenna(s) 1116 for each wireless communication scheme. In this case, the antenna switches 1115 may be omitted from the configuration of the smart phone 1100.

The processor 1101, the memory 1102, the storage device 1103, the external connection interface 1104, the camera 1106, the sensor 1107, the microphone 1108, the input device 1109, the display device 1110, the speaker 1111, the radio communication interface 1112, and the auxiliary controller 1119 are connected to each other via the bus 1117. The battery 1118 supplies power to each block of the smart phone 1100 as shown in Figure 11 via a feeder line. The feeder line is partially shown as a dashed line in the figure. The auxiliary controller 1119 operates the least necessary function of the smart phone 1100 in a sleep mode, for example.

In the smart phone 1100 shown in Figure 11, the generation unit 210, the measurement unit 240, the sorting unit 250, the determination unit 260, the judgment unit 270, the switching unit 280 and the adjustment unit 290 described by using Figure 2, and the priority determination unit 520, the generation unit 530, the measurement unit 550, the judgment unit 560, the switching unit 570 and the adjustment unit 580 described by using Figure 5 may be implemented through the processor 1101 or the auxiliary controller 1119. At least part of the functions may be implemented by the processor 1101 or the auxiliary controller 1119. For example, the processor 1101 or the auxiliary controller 1119 may execute instructions stored in the memory 1102 or the storage device 1103 to perform functions of generating link quality indication information, measuring link quality, sorting links, determining priorities of the links, determining whether the quality of a direct link meets a switching condition, switching the link, adjusting a period for generating the link quality indication information, and generating link priority indication information.

### (Second Application Example)

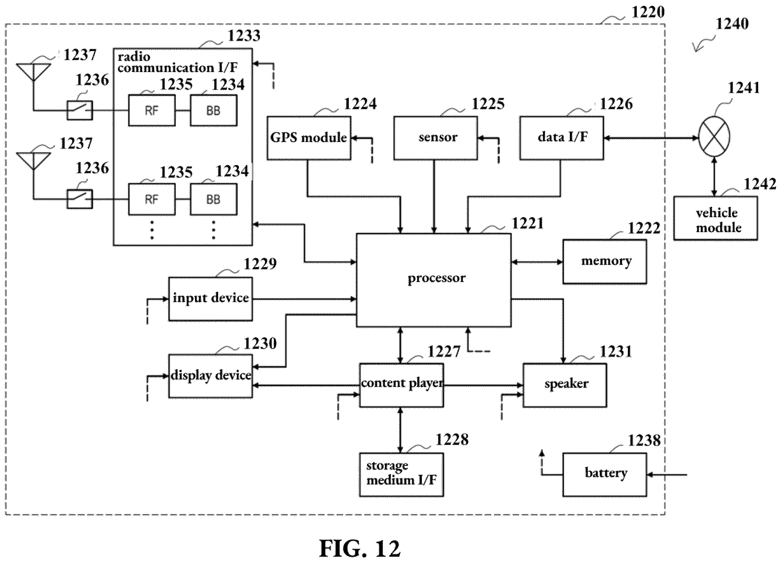

Figure 12 is a block diagram showing an example of a schematic configuration of an automobile navigation device 1220 to which the technology of the present disclosure may be applied. The automobile navigation device 1220 includes a processor 1221, a memory 1222, a global positioning system (GPS) module 1224, a sensor 1225, a data interface 1226, a content player 1227, a storage medium interface 1228, an input device 1229, a display device 1230, a speaker 1231, a radio communication interface 1233, one or more antenna switches 1236, one or more antennas 1237, and a battery 1238.

The processor 1221 may be, for example, a CPU or SoC, and controls the navigation function and other functions of the automobile navigation device 1220. The memory 1222 includes an RAM and an ROM, and stores data and programs executed by the processor 1221.

The GPS module 1224 measures a position (such as latitude, longitude, and altitude) of the automobile navigation device 1220 based on a GPS signal received from a GPS satellite. The sensor 1225 may include a group of sensors, such as a gyroscope sensor, a geomagnetic sensor, and an air pressure sensor. The data interface 1226 is connected to for example an in-vehicle network 1241 via a terminal not shown, and acquires data (such as vehicle speed data) generated by a vehicle.

The content player 1227 reproduces content stored in a storage medium (such as a CD and a DVD) inserted into the storage medium interface 1228. The input device 1229 includes, for example, a touch sensor configured to detect a touch on a screen of the display device 1230, a button, or a switch, and receives an operation or information inputted from the user. The display device 1230 includes a screen such as an LCD or OLED display, and displays an image of a navigation function or reproduced content. The speaker 1231 outputs a sound of the navigation function or the reproduced content.

The radio communication interface 1233 supports any cellular communication scheme (such as LTE and LTE-Advanced), and performs wireless communications. The radio communication interface 1233 may generally include, for example, a BB processor 1234 and an RF circuit 1235. The BB processor 1234 may perform, for example, encoding/decoding, modulation/demodulation, and multiplexing/demultiplexing, and perform various types of signal processing for wireless communications. In addition, the RF circuit 1235 may include, for example, a mixer, a filter and an amplifier, and transmit and receive a wireless signal via the antenna 1237. The radio communication interface 1233 may be a chip module on which the BB processor 1234 and the RF circuit 1235 are integrated. As shown in Figure 12, the radio communication interface 1233 may include multiple BB processors 1234 and multiple RF circuits 1235. Although Figure 12 shows an example in which the radio communication interface 1233 includes multiple BB processors 1234 and multiple RF circuits 1235, the radio communication interface 1233 may include a single BB processor 1234 or a single RF circuit 1235.

In addition to the cellular communication scheme, the radio communication interface 1233 may support another type of wireless communication scheme, such as a short-range wireless communication scheme, a near field communication scheme, or a wireless LAN scheme. In this case, the radio communication interface 1233 may include a BB processor 1234 and an RF circuit 1235 for each wireless communication scheme.

Each of the antenna switches 1236 switches a connection destination of the antenna 1237 among multiple circuits (such as circuits for different wireless communication schemes) included in the radio communication interface 1233.

Each of the antennas 1237 includes a single or multiple antenna elements (such as multiple antenna elements included in a MIMO antenna), and is configured for the radio communication interface 1233 to transmit and receive wireless signals. As shown in Figure 12, the automobile navigation device 1220 may include multiple antennas 1237. Although Figure 12 shows an example in which the automobile navigation device 1220 includes multiple antennas 1237, the automobile navigation device 1220 may include a single antenna 1237.

In addition, the automobile navigation device 1220 may include antenna(s) 2137 for each wireless communication scheme. In this case, the antenna switches 1236 may be omitted from the configuration of the automobile navigation device 1220.

The battery 1238 supplies power to blocks of the automobile navigation device 1220 shown in Figure 12 via a feeder line. The feeder line is partially shown as a dashed line in the figure. The battery 1238 accumulates electric power supplied from the vehicle.

In the automobile navigation device 1220 shown in Figure 12, the generation unit 210, the measurement unit 240, the sorting unit 250, the determination unit 260, the judgment unit 270, the switching unit 280 and the adjustment unit 290 described by using Figure 2, and the priority determination unit 520, the generation unit 530, the measurement unit 550, the judgment unit 560, the switching unit 570 and the adjustment unit 580 described by using Figure 5 may be implemented through the processor 1221. At least part of the functions may be implemented by the processor 1221. For example, the processor 1221 may execute instructions stored in the memory 1222 to perform functions of generating link quality indication information, measuring link quality, sorting links, determining priorities of the links, determining whether a quality of a direct link meets a switching condition, switching the link, adjusting a period for generating the link quality indication information, and generating link priority indication information.

The technology of the present disclosure may be implemented as an in-vehicle system (or vehicle) 1240 including the vehicle navigation device 1220, an in-vehicle network 1241, and one or more blocks of vehicle modules 1242. The vehicle modules 1242 generate vehicle data (such as vehicle speed, engine speed, and failure information), and outputs the generated data to the in-vehicle network 1241.

Preferred embodiments of the present disclosure are described above with reference to the drawings. However, the present disclosure is not limited to the above examples. Those skilled in the art can make various alternations and modifications within the scope of the appended claims. It should be understood that these alternations and modifications shall naturally fall within the technical scope of the present disclosure.

For example, units shown by a dotted line block in the functional block diagram shown in the drawings indicate that the functional units are optional in the corresponding device, and the optional functional units may be combined appropriately to achieve required functions.

For example, multiple functions implemented by a single unit in the above embodiments may be implemented by separate devices. Alternatively, multiple functions implemented by multiple units in the above embodiments may be implemented by separate devices respectively. In addition, one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in other order appropriately.

Furthermore, the present disclosure may have configurations as described below.
1. User equipment, comprising processing circuitry configured to:
   generate and transmit link quality indication information to counterpart user equipment, the link quality indication information indicating a quality of a link between the user equipment and each of a plurality of communication apparatuses; and
   receive, from the counterpart user equipment, link priority indication information determined according to the link quality indication information, the link priority indication information including priority information of a plurality of links between the counterpart user equipment and the user equipment.
2. The user equipment according to 1, wherein the link quality indication information includes priority information of the link between the user equipment and each communication apparatus.
3. The user equipment according to 2, wherein the processing circuitry is further configured to:
   measure the quality of the link between the user equipment and each communication apparatus;
   sort the link between the user equipment and each communication apparatus according to a measurement result; and
   determine the priority information of the link between the user equipment and each communication apparatus according to a sorting result.
4. The user equipment according to 3, wherein the processing circuitry is further configured to:
   represent the link between the user equipment and the communication apparatus by an identification of the communication apparatus.
5. The user equipment according to 1, wherein the plurality of communication apparatuses are communication apparatuses that have established connections with the user equipment, and the plurality of communication apparatuses are user equipment, road side units or intelligent reflecting surfaces.
6. The user equipment according to 1, wherein the plurality of links between the counterpart user equipment and the user equipment include a direct link and a non-direct link between the counterpart user equipment and the user equipment.
7. The user equipment according to 1, wherein the processing circuitry is further configured to:
   switch to a link having the highest priority to communicate with the counterpart user equipment, in a case where a quality of a direct link between the counterpart user equipment and the user equipment meets a switching condition.
8. The user equipment according to 7, wherein the processing circuitry is further configured to:
   determine that the quality of the direct link meets the switching condition, in a case where the number of times that the quality of the direct link is less than a quality threshold within a predetermined time window is greater than a threshold of the number of times.
9. The user equipment according to 8, wherein the processing circuitry is further configured to:
   transmit a switching notification to the counterpart user equipment on determining that the quality of the direct link meets the switching condition, to notify the counterpart user equipment to switch to the link having the highest priority to communicate with the user equipment.
10. The user equipment according to 7, wherein the processing circuitry is further configured to:
   receive a switching notification from the counterpart user equipment; and
   determine, based on the switching notification, that the quality of the direct link meets the switching condition.
11. The user equipment according to 1, wherein the processing circuitry is further configured to:
   generate the link quality indication information periodically.
12. The user equipment according to 11, wherein the processing circuitry is further configured to:
   adjust a period for generating the link quality indication information, in a case where a rate of change of the quality of the direct link between the counterpart user equipment and the user equipment exceeds a rate threshold range.
13. User equipment, comprising processing circuitry configured to:
   receive link quality indication information from counterpart user equipment, the link quality indication information indicating a quality of a link between the counterpart user equipment and each of a plurality of communication apparatuses;
   determine link priority indication information according to the link quality indication information, the link priority indication information including priority information of a plurality of links between the user equipment and the counterpart user equipment; and
   transmit the link priority indication information to the counterpart user equipment.
14. The user equipment according to 13, wherein the processing circuitry is further configured to:
   determine the quality of each link between the user equipment and the counterpart user equipment;
   sort the plurality of links according to a determination result; and
   determine the priority information of the plurality of links according to a sorting result.
15. The user equipment according to 14, wherein the plurality of links include a direct link and a non-direct link between the user equipment and the counterpart user equipment, and
   wherein the processing circuitry is further configured to determine the quality of the non-direct link based on the quality of the link between the user equipment and a communication apparatus on each non-direct link and the quality of the link between the communication apparatus and the counterpart user equipment.
16. The user equipment according to 15, wherein the processing circuitry is further configured to:
   represent the non-direct link by an identification of the communication apparatus on the non-direct link.
17. The user equipment according to 13, wherein the processing circuitry is further configured to:
   switch to a link having the highest priority to communicate with the counterpart user equipment, in a case where a quality of a direct link between the user equipment and the counterpart user equipment meets a switching condition.
18. The user equipment according to 17, wherein the processing circuitry is further configured to:
   determine that the quality of the direct link meets the switching condition, in a case where the number of times that the quality of the direct link is less than a quality threshold within a predetermined time window is greater than a threshold of the number of times.
19. The user equipment according to 18, wherein the processing circuitry is further configured to:
   transmit a switching notification to the counterpart user equipment on determining that the quality of the direct link meets the switching condition, to notify the counterpart user equipment to switch to the link having the highest priority to communicate with the user equipment.
20. The user equipment according to 17, wherein the processing circuitry is further configured to:
   receive a switching notification from the counterpart user equipment; and
   determine, based on the switching notification, that the quality of the direct link meets the switching condition.
21. The user equipment according to 13, wherein the processing circuitry is further configured to:
   receive the link quality indication information periodically.
22. The user equipment according to 21, wherein the processing circuitry is further configured to:
   adjust a period for generating the link quality indication information by the counterpart user equipment, in a case where a rate of change of the quality of the direct link between the user equipment and the counterpart user equipment exceeds a rate threshold range.
23. The user equipment according to 17, wherein the processing circuitry is further configured to:
   switch to a link having the second highest priority to communicate with the counterpart user equipment, in a case where the communication with the counterpart user equipment using the link having the highest priority fails.
24. The user equipment according to 23, wherein the processing circuitry is further configured to:
   determine that the communication fails in a case where no ACK message with respect to data of the user equipment is received from the counterpart user equipment within a predetermined time.
25. The user equipment according to 23, wherein the processing circuitry is further configured to:
   receive a notification indicating failure of the communication from a communication apparatus on the link having the highest priority.
26. A wireless communication method performed by user equipment, comprising:
   generating and transmitting link quality indication information to counterpart user equipment, the link quality indication information indicating a quality of a link between the user equipment and each of a plurality of communication apparatuses; and
   receiving, from the counterpart user equipment, link priority indication information determined according to the link quality indication information, the link priority indication information including priority information of a plurality of links between the counterpart user equipment and the user equipment.
27. The wireless communication method according to 26, wherein the link quality indication information includes priority information of the link between the user equipment and each communication apparatus.
28. The wireless communication method according to 27, further comprising:
   measuring the quality of the link between the user equipment and each communication apparatus;
   sorting the link between the user equipment and each communication apparatus according to a measurement result; and
   determining the priority information of the link between the user equipment and each communication apparatus according to a sorting result.
29. The wireless communication method according to 28, further comprising:
   representing the link between the user equipment and the communication apparatus by an identification of the communication apparatus.
30. The wireless communication method according to 26, wherein the plurality of communication apparatuses are communication apparatuses that have established connections with the user equipment, and the plurality of communication apparatuses are user equipment, road side units or intelligent reflecting surfaces.
31. The wireless communication method according to 26, wherein the plurality of links between the counterpart user equipment and the user equipment include a direct link and a non-direct link between the counterpart user equipment and the user equipment.
32. The wireless communication method according to 26, further comprising:
   switching to a link having the highest priority to communicate with the counterpart user equipment, in a case where a quality of a direct link between the counterpart user equipment and the user equipment meets a switching condition.
33. The wireless communication method according to 32, further comprising:
   determining that the quality of the direct link meets the switching condition, in a case where the number of times that the quality of the direct link is less than a quality threshold within a predetermined time window is greater than a threshold of the number of times.
34. The wireless communication method according to 33, further comprising:
   transmitting a switching notification to the counterpart user equipment on determining that the quality of the direct link meets the switching condition, to notify the counterpart user equipment to switch to the link having the highest priority to communicate with the user equipment.
35. The wireless communication method according to 32, further comprising:
   receiving a switching notification from the counterpart user equipment; and
   determining, based on the switching notification, that the quality of the direct link meets the switching condition.
36. The wireless communication method according to 26, further comprising:
   generating the link quality indication information periodically.
37. The wireless communication method according to 36, further comprising:
   adjusting a period for generating the link quality indication information, in a case where a rate of change of the quality of the direct link between the counterpart user equipment and the user equipment exceeds a rate threshold range.
38. A wireless communication method performed by user equipment, comprising:
   receiving link quality indication information from counterpart user equipment, the link quality indication information indicating a quality of a link between the counterpart user equipment and each of a plurality of communication apparatuses;
   determining link priority indication information according to the link quality indication information, the link priority indication information including priority information of a plurality of links between the user equipment and the counterpart user equipment; and
   transmitting the link priority indication information to the counterpart user equipment.
39. The wireless communication method according to 38, further comprising:
   determining the quality of each link between the user equipment and the counterpart user equipment;
   sorting the plurality of links according to a determination result; and
   determining the priority information of the plurality of links according to a sorting result.
40. The wireless communication method according to 39, wherein the plurality of links include a direct link and a non-direct link between the user equipment and the counterpart user equipment, and
   wherein the wireless communication method further comprises: determining the quality of the non-direct link based on the quality of the link between the user equipment and a communication apparatus on each non-direct link and the quality of the link between the communication apparatus and the counterpart user equipment.
41. The wireless communication method according to 40, further comprising:
   representing the non-direct link by an identification of the communication apparatus on the non-direct link.
42. The wireless communication method according to 38, further comprising:
   switching to a link having the highest priority to communicate with the counterpart user equipment, in a case where a quality of a direct link between the user equipment and the counterpart user equipment meets a switching condition.
43. The wireless communication method according to 42, further comprising:
   determining that the quality of the direct link meets the switching condition, in a case where the number of times that the quality of the direct link is less than a quality threshold within a predetermined time window is greater than a threshold of the number of times.
44. The wireless communication method according to 43, further comprising:
   transmitting a switching notification to the counterpart user equipment on determining that the quality of the direct link meets the switching condition, to notify the counterpart user equipment to switch to the link having the highest priority to communicate with the user equipment.
45. The wireless communication method according to 42, further comprising:
   receiving a switching notification from the counterpart user equipment; and
   determining, based on the switching notification, that the quality of the direct link meets the switching condition.
46. The wireless communication method according to 38, further comprising:
   receiving the link quality indication information periodically.
47. The wireless communication method according to 46, further comprising:
   adjusting a period for generating the link quality indication information by the counterpart user equipment, in a case where a rate of change of the quality of the direct link between the user equipment and the counterpart user equipment exceeds a rate threshold range.
48. The wireless communication method according to 42, further comprising:
   switching to a link having the second highest priority to communicate with the counterpart user equipment, in a case where the communication with the counterpart user equipment using the link having the highest priority fails.
49. The wireless communication method according to 48, further comprising:
   determining that the communication fails in a case where no ACK message with respect to data of the user equipment is received from the counterpart user equipment within a predetermined time.
50. The wireless communication method according to 48, further comprising:
   receiving a notification indicating failure of the communication from a communication apparatus on the link having the highest priority.
51. A computer-readable storage medium comprising executable computer instructions that, when executed by a computer, cause the computer to perform the wireless communication method according to any one of 26 to 50.

Although the embodiments of the present disclosure are described in detail above with reference to the accompanying drawings, it should be understood that the embodiments are only for illustrating the present disclosure and do not constitute a limitation of the present disclosure. For those skilled in the art, various modifications and changes can be made to the embodiments without departing from the spirit and scope of the present disclosure. Therefore, the scope of the present disclosure is limited by only the appended claims and equivalents thereof.

## Claims

1. User equipment, comprising processing circuitry configured to:
generate and transmit link quality indication information to counterpart user equipment, the link quality indication information indicating a quality of a link between the user equipment and each of a plurality of communication apparatuses; and
receive, from the counterpart user equipment, link priority indication information determined according to the link quality indication information, the link priority indication information including priority information of a plurality of links between the counterpart user equipment and the user equipment.

2. The user equipment according to claim 1, wherein the link quality indication information includes priority information of the link between the user equipment and each communication apparatus.

3. The user equipment according to claim 2, wherein the processing circuitry is further configured to:
measure the quality of the link between the user equipment and each communication apparatus;
sort the link between the user equipment and each communication apparatus according to a measurement result; and
determine the priority information of the link between the user equipment and each communication apparatus according to a sorting result.

4. The user equipment according to claim 3, wherein the processing circuitry is further configured to:
represent the link between the user equipment and the communication apparatus by an identification of the communication apparatus.

5. The user equipment according to claim 1, wherein the plurality of communication apparatuses are communication apparatuses that have established connections with the user equipment, and the plurality of communication apparatuses are user equipment, road side units or intelligent reflecting surfaces.

6. The user equipment according to claim 1, wherein the plurality of links between the counterpart user equipment and the user equipment include a direct link and a non-indirect link between the counterpart user equipment and the user equipment.

7. The user equipment according to claim 1, wherein the processing circuitry is further configured to:
switch to a link having the highest priority to communicate with the counterpart user equipment, in a case where a quality of a direct link between the counterpart user equipment and the user equipment meets a switching condition.

8. The user equipment according to claim 7, wherein the processing circuitry is further configured to:
determine that the quality of the direct link meets the switching condition, in a case where the number of times that the quality of the direct link is less than a quality threshold within a predetermined time window is greater than a threshold of the number of times.

9. The user equipment according to claim 8, wherein the processing circuitry is further configured to:
transmit a switching notification to the counterpart user equipment on determining that the quality of the direct link meets the switching condition, to notify the counterpart user equipment to switch to the link having the highest priority to communicate with the user equipment.

10. The user equipment according to claim 7, wherein the processing circuitry is further configured to:
receive a switching notification from the counterpart user equipment; and
determine, based on the switching notification, that the quality of the direct link meets the switching condition.

11. The user equipment according to claim 1, wherein the processing circuitry is further configured to:
generate the link quality indication information periodically.

12. The user equipment according to claim 11, wherein the processing circuitry is further configured to:
adjust a period for generating the link quality indication information, in a case where a rate of change of the quality of the direct link between the counterpart user equipment and the user equipment exceeds a rate threshold range.

13. User equipment, comprising processing circuitry configured to:
receive link quality indication information from counterpart user equipment, the link quality indication information indicating a quality of a link between the counterpart user equipment and each of a plurality of communication apparatuses;
determine link priority indication information according to the link quality indication information, the link priority indication information including priority information of a plurality of links between the user equipment and the counterpart user equipment; and
transmit the link priority indication information to the counterpart user equipment.

14. The user equipment according to claim 13, wherein the processing circuitry is further configured to:
determine the quality of each link between the user equipment and the counterpart user equipment;
sort the plurality of links according to a determination result; and
determine the priority information of the plurality of links according to a sorting result.

15. The user equipment according to claim 14, wherein the plurality of links include a direct link and a non-direct link between the user equipment and the counterpart user equipment, and
wherein the processing circuitry is further configured to determine the quality of the non-direct link based on the quality of the link between the user equipment and a communication apparatus on each non-direct link and the quality of the link between the communication apparatus and the counterpart user equipment.

16. The user equipment according to claim 15, wherein the processing circuitry is further configured to:
represent the non-direct link by an identification of the communication apparatus on the non-direct link.

17. The user equipment according to claim 13, wherein the processing circuitry is further configured to:
switch to a link having the highest priority to communicate with the counterpart user equipment, in a case where a quality of a direct link between the user equipment and the counterpart user equipment meets a switching condition.

18. The user equipment according to claim 17, wherein the processing circuitry is further configured to:
determine that the quality of the direct link meets the switching condition, in a case where the number of times that the quality of the direct link is less than a quality threshold within a predetermined time window is greater than a threshold of the number of times.

19. The user equipment according to claim 18, wherein the processing circuitry is further configured to:
transmit a switching notification to the counterpart user equipment on determining that the quality of the direct link meets the switching condition, to notify the counterpart user equipment to switch to the link having the highest priority to communicate with the user equipment.

20. The user equipment according to claim 17, wherein the processing circuitry is further configured to:
receive a switching notification from the counterpart user equipment; and
determine, based on the switching notification, that the quality of the direct link meets the switching condition.

21. The user equipment according to claim 13, wherein the processing circuitry is further configured to:
receive the link quality indication information periodically.

22. The user equipment according to claim 21, wherein the processing circuitry is further configured to:
adjust a period for generating the link quality indication information by the counterpart user equipment, in a case where a rate of change of the quality of the direct link between the user equipment and the counterpart user equipment exceeds a rate threshold range.

23. The user equipment according to claim 17, wherein the processing circuitry is further configured to:
switch to a link having the second highest priority to communicate with the counterpart user equipment, in a case where the communication with the counterpart user equipment using the link having the highest priority fails.

24. The user equipment according to claim 23, wherein the processing circuitry is further configured to:
determine that the communication fails in a case where no ACK message with respect to data of the user equipment is received from the counterpart user equipment within a predetermined time.

25. The user equipment according to claim 23, wherein the processing circuitry is further configured to:
receive a notification indicating failure of the communication from a communication apparatus on the link having the highest priority.

26. A wireless communication method performed by user equipment, comprising:
generating and transmitting link quality indication information to counterpart user equipment, the link quality indication information indicating a quality of a link between the user equipment and each of a plurality of communication apparatuses; and
receiving, from the counterpart user equipment, link priority indication information determined according to the link quality indication information, the link priority indication information including priority information of a plurality of links between the counterpart user equipment and the user equipment.

27. The wireless communication method according to claim 26, wherein the link quality indication information includes priority information of the link between the user equipment and each communication apparatus.

28. The wireless communication method according to claim 27, further comprising:
measuring the quality of the link between the user equipment and each communication apparatus;
sorting the link between the user equipment and each communication apparatus according to a measurement result; and
determining the priority information of the link between the user equipment and each communication apparatus according to a sorting result.

29. The wireless communication method according to claim 28, further comprising:
representing the link between the user equipment and the communication apparatus by an identification of the communication apparatus.

30. The wireless communication method according to claim 26, wherein the plurality of communication apparatuses are communication apparatuses that have established connections with the user equipment, and the plurality of communication apparatuses are user equipment, road side units or intelligent reflecting surfaces.

31. The wireless communication method according to claim 26, wherein the plurality of links between the counterpart user equipment and the user equipment include a direct link and a non-direct link between the counterpart user equipment and the user equipment.

32. The wireless communication method according to claim 26, further comprising:
switching to a link having the highest priority to communicate with the counterpart user equipment, in a case where a quality of a direct link between the counterpart user equipment and the user equipment meets a switching condition.

33. The wireless communication method according to claim 32, further comprising:
determining that the quality of the direct link meets the switching condition, in a case where the number of times that the quality of the direct link is less than a quality threshold within a predetermined time window is greater than a threshold of the number of times.

34. The wireless communication method according to claim 33, further comprising:
transmitting a switching notification to the counterpart user equipment on determining that the quality of the direct link meets the switching condition, to notify the counterpart user equipment to switch to the link having the highest priority to communicate with the user equipment.

35. The wireless communication method according to claim 32, further comprising:
receiving a switching notification from the counterpart user equipment; and
determining, based on the switching notification, that the quality of the direct link meets the switching condition.

36. The wireless communication method according to claim 26, further comprising:
generating the link quality indication information periodically.

37. The wireless communication method according to claim 36, further comprising:
adjusting a period for generating the link quality indication information, in a case where a rate of change of the quality of the direct link between the counterpart user equipment and the user equipment exceeds a rate threshold range.

38. A wireless communication method performed by user equipment, comprising:
receiving link quality indication information from counterpart user equipment, the link quality indication information indicating a quality of a link between the counterpart user equipment and each of a plurality of communication apparatuses;
determining link priority indication information according to the link quality indication information, the link priority indication information including priority information of a plurality of links between the user equipment and the counterpart user equipment; and
transmitting the link priority indication information to the counterpart user equipment.

39. The wireless communication method according to claim 38, further comprising:
determining the quality of each link between the user equipment and the counterpart user equipment;
sorting the plurality of links according to a determination result; and
determining the priority information of the plurality of links according to a sorting result.

40. The wireless communication method according to claim 39, wherein the plurality of links include a direct link and a non-direct link between the user equipment and the counterpart user equipment, and
wherein the wireless communication method further comprises: determining the quality of the non-direct link based on the quality of the link between the user equipment and a communication apparatus on each non-direct link and the quality of the link between the communication apparatus and the counterpart user equipment.

41. The wireless communication method according to claim 40, further comprising:
representing the non-direct link by an identification of the communication apparatus on the non-direct link.

42. The wireless communication method according to claim 38, further comprising:
switching to a link having the highest priority to communicate with the counterpart user equipment, in a case where a quality of a direct link between the user equipment and the counterpart user equipment meets a switching condition.

43. The wireless communication method according to claim 42, further comprising:
determining that the quality of the direct link meets the switching condition, in a case where the number of times that the quality of the direct link is less than a quality threshold within a predetermined time window is greater than a threshold of the number of times.

44. The wireless communication method according to claim 43, further comprising:
transmitting a switching notification to the counterpart user equipment on determining that the quality of the direct link meets the switching condition, to notify the counterpart user equipment to switch to the link having the highest priority to communicate with the user equipment.

45. The wireless communication method according to claim 42, further comprising:
receiving a switching notification from the counterpart user equipment; and
determining, based on the switching notification, that the quality of the direct link meets the switching condition.

46. The wireless communication method according to claim 38, further comprising:
receiving the link quality indication information periodically.

47. The wireless communication method according to claim 46, further comprising:
adjusting a period for generating the link quality indication information by the counterpart user equipment, in a case where a rate of change of the quality of the direct link between the user equipment and the counterpart user equipment exceeds a rate threshold range.

48. The wireless communication method according to claim 42, further comprising:
switching to a link having the second highest priority to communicate with the counterpart user equipment, in a case where the communication with the counterpart user equipment using the link having the highest priority fails.

49. The wireless communication method according to claim 48, further comprising:
determining that the communication fails in a case where no ACK message with respect to data of the user equipment is received from the counterpart user equipment within a predetermined time.

50. The wireless communication method according to claim 48, further comprising:
receiving a notification indicating failure of the communication from a communication apparatus on the link having the highest priority.

51. A computer-readable storage medium comprising executable computer instructions that, when executed by a computer, cause the computer to perform the wireless communication method according to any one of claims 26 to 50.
